# FASCICULE DE BREVET EUROPEEN

(11) **EP 3 378 346 B1**
(45) Date de publication et mention de la délivrance du brevet: **18.01.2023**
(21) Numéro de dépôt: 17162186.5
(22) Date de dépôt: 21.03.2017
(51) Int. Cl.: A44C 17/00, A44C 17/02, G04B 47/04

(54) **PIERRE ET SON PROCÉDÉ DE RÉALISATION**
STEIN UND SEIN HERSTELLUNGSVERFAHREN
STONE AND METHOD FOR MANUFACTURING SAME

(43) Date de publication de la demande: 26.09.2018
(73) Titulaire: Omega SA, 2502 Bienne (CH)
(72) Inventeur: Monachon, Jean-Claude, 2022 Bevaix (CH)
(74) Mandataire: ICB SA

(56) Documents cités:
- EP-A1- 1 110 472
- EP-A2- 2 573 628
- EP-B1- 1 110 472
- WO-A1-2016/083680
- DE-A1- 2 247 790
- US-A1- 2002 195 095
- US-A1- 2003 192 347

## Description

### Domaine technique

La présente invention se rapporte au domaine de la taille de pierres destinées plus particulièrement à une utilisation dans le domaine horloger.

### Arrière-plan technologique

Dans les montres haut de gamme, il est connu de sublimer le cadran avec des pierres précieuses ou semi-précieuses et notamment avec des diamants. Par exemple, les documents WO 2014/122296 et EP 0 257 453 divulguent des cadrans munis de pierres présentant une forme ronde classique.

Pour obtenir un effet esthétique particulier, d'autres formes originales peuvent être imaginées. A cet égard, dans la littérature brevet, on trouve le document US 6,405,562 qui divulgue un diamant avec un rondiste décrivant un contour à plusieurs lobes. Cependant, ces pierres à forme originale divulguées dans l'art antérieur présentent des dimensions et, en particulier, une épaisseur peu compatible avec un agencement sur un cadran. En effet, l'épaisseur maximale va être limitée par l'épaisseur du cadran, en supposant que la pierre s'étende sur toute l'épaisseur du cadran, et par l'espace disponible entre le cadran et les aiguilles afin de ne pas entraver leurs mouvements. Typiquement, l'épaisseur totale incluant l'épaisseur du cadran et l'espace entre le cadran et l'aiguille des heures qui est la plus proche du cadran est de l'ordre du millimètre. Pour réaliser des formes originales, le défi est dès lors de tailler une pierre de très faible épaisseur sans la fracturer tout en gardant ses propriétés de brillance et un aspect esthétique attractif.

On connait en outre du document USD416510S une pierre précieuse ornementale à multiples facettes en forme d'étoile à cinq branches.

### Résumé de l'invention

La présente invention propose ainsi de réaliser une pierre présentant une forme originale, à savoir une forme en étoile, avec une taille permettant de lui conférer une brillance optimale et un aspect esthétique attractif tout étant compatible avec un sertissage sur un cadran conformément au procédé défini par la revendication 1.

La présente invention propose en outre un cadran muni de moyens de fixation quasi invisibles aux yeux de l'utilisateur et permettant de mettre en valeur la pierre.

A ces fins, une pierre, son procédé de réalisation, le chaton destiné à la sertir ainsi qu'un cadran et une montre selon les revendications annexées sont proposés.

### Brève description des figures

L'invention sera décrite ci-après de manière plus détaillée à l'aide des dessins annexés, donnés à titre d'exemples nullement limitatifs, dans lesquels :
Les figures 1 à 3 représentent différentes vues du diamant selon l'invention. La figure 1 est une vue du dessus. La figure 2 est une vue du dessous et la figure 3 est une vue de côté.
Les figures 4 à 9 illustrent quelques séquences du procédé de taille de la pierre selon l'invention.
Les figures 10 à 12 représentent respectivement une vue du dessus, une vue de côté et une vue en perspective du chaton destiné à accueillir la pierre selon l'invention.
La figure 13 est une demi-coupe à 6h d'une partie d'une pièce d'horlogerie comportant le diamant selon l'invention serti dans le cadran.
La figure 14 est vue en plan de la montre comportant le cadran muni de la pierre sertie selon l'invention.

### Description détaillée de l'invention

La présente invention se rapporte à une pierre et à son procédé de réalisation. Elle se rapporte également au cadran muni de la pierre et aux moyens de fixation mis en oeuvre pour fixer la pierre sur le cadran. L'invention est plus particulièrement décrite pour un diamant mais elle peut également se rapporter à une pierre précieuse ou semi-précieuse.

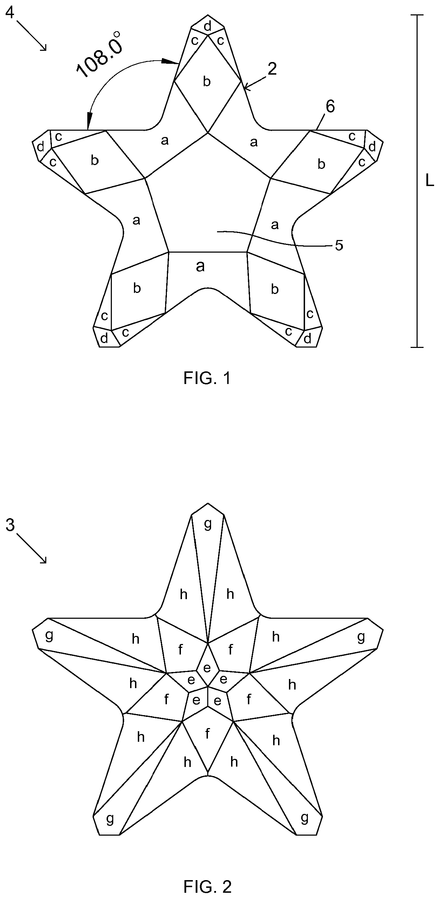

Les figures 1 à 3 présentent différentes vues du diamant 1 selon l'invention. Il présente une forme en étoile. Dans les exemples, l'étoile comporte cinq branches 2 identiques décalées angulairement de 108° mais la présente invention n'exclut pas de réaliser des étoiles avec un nombre différent de branches (3, 4, 6, etc.).

Le diamant selon l'invention comporte une culasse 3 dans laquelle sont taillées plusieurs facettes (e, f, g, h) et une couronne 4 également facettée (a, b, c, d) et surmontée d'une table 5. A la jonction entre la culasse et la couronne, le diamant comporte un rondiste 6 dont le contour a la forme d'une étoile à 5 branches.

En plus de la table 5, la couronne 4 comporte 25 facettes (fig.1). La table 5 a une forme pentagonale, de préférence à cinq côtés de longueur égale. Elle est entourée d'une première série de cinq facettes a qui partagent un de leur côtés avec un côté du pentagone et sont connectées au rondiste 6. La couronne comporte une seconde série de cinq facettes losanges b qui partagent chacune deux côtés avec des facettes adjacentes a et un sommet avec le pentagone formant la table. Elle comporte une troisième série de dix facettes triangles c avec chaque facette c partageant un côté avec une facette losange b et ayant un côté connecté au rondiste 6. Finalement, elle comporte une quatrième série de cinq facettes quadrangles d formant l'extrémité de chaque branche de l'étoile. Pour un effet esthétique optimal, le sommet commun au pentagone de la table 5 et à la facette b, le sommet commun à la facette b et à la facette d et l'extrémité de la branche sont alignés dans le plan formé par le rondiste.

Selon l'invention, les extrémités des branches formées par les facettes d sont taillées en double biseau pour permettre un sertissage plus aisé sans risque de fracturer les extrémités. Selon une variante non représentée, elles peuvent à l'inverse être taillées en V, l'extrémité des branches étant alors formée par les facettes c. Dans cette dernière configuration, le nombre de facettes de la couronne est alors réduit à 20.

La culasse 3 visible à la figure 2 comporte 25 facettes. Partant de son centre, la culasse 3 comporte une cinquième série de cinq facettes quadrangles e formant une étoile à cinq branches entourée d'une sixième série de cinq facettes quadrangles f décrivant une étoile concentrique autour de l'étoile formée par les facettes e et décalée de 54° par rapport à cette dernière. Cette double étoile est visible au travers de la table de la couronne et offre un bel effet visuel. La culasse comporte en outre une septième série de cinq facettes quadrangles g avec chaque facette partageant un sommet avec une facette e et s'étendant jusqu'à l'extrémité d'une branche. Pour finir, la culasse comporte une huitième série de dix facettes triangles h intercalées entre les facettes f et g et connectées au rondiste 6. Selon l'invention, le centre de la culasse, le sommet commun à la facette e et à la facette g et l'extrémité d'une branche sont alignés dans le plan formé par le rondiste.

Selon l'invention, la hauteur H entre la table et l'extrémité de la culasse est inférieure à 2 mm, de préférence à 1,7 mm, plus préférentiellement à 1,3 mm, encore plus préférentiellement à 1 mm avec une valeur minimum de l'ordre de 0.5 mm. La longueur L entre une extrémité d'une branche et les extrémités de deux branches opposées est comprise entre 1 et 3 mm, de préférence, entre 1.2 et 2.5 mm et plus préférentiellement entre 1.4 et 1.8 mm. Par rapport au plan formé par le rondiste, les facettes e, f, g et h de la culasse ont respectivement des angles compris entre 12 et 20°, 23 et 31°, 30 et 38° et entre 32 et 40°. De préférence, les facettes e, f, g et h sont respectivement orientées à 15.9°, 27°, 34° et 36.1° par rapport au plan formé par le rondiste. Les facettes a, b, c et d ont respectivement des angles compris entre 15 et 23°, 18 et 26°, 24 et 32° et entre 36 et 44° par rapport au plan du rondiste. Préférentiellement, les facettes a, b, c et d ont respectivement des angles de 19.3°, 22.2°, 27.7° et 40°.

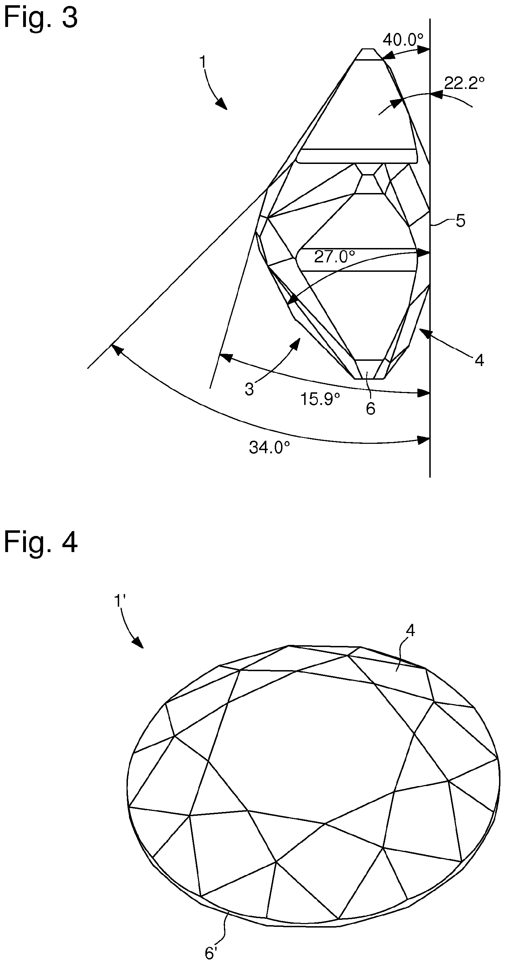

Pour réaliser le diamant selon l'invention, quelques séquences du procédé de taille sont illustrées aux figures 4 à 9.

Le procédé consiste à partir d'une pierre ronde avec une taille brillant qu'on qualifiera de pierre de base, à facetter sa culasse, sa couronne et son rondiste pour obtenir les facettes précitées de manière classique par meulage et ensuite à découper par laser le pourtour de la pierre transformée pour former les différentes branches de l'étoile. De préférence, le facettage s'effectue avant la découpe laser pour éviter de tailler une pierre de taille encore réduite. Dans l'exemple ci-dessous, on commence par tailler les facettes de la couronne et puis celles de la culasse mais cela pourrait également être l'inverse.

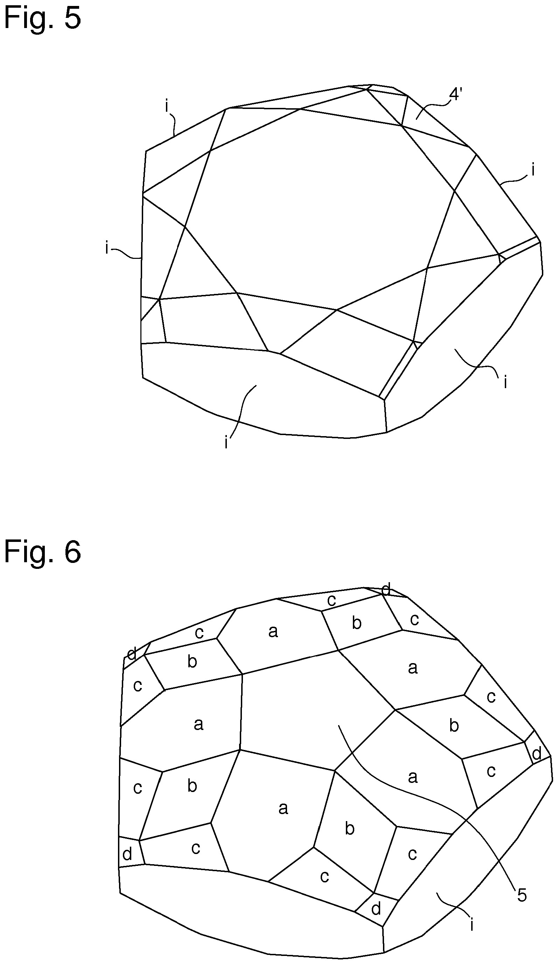

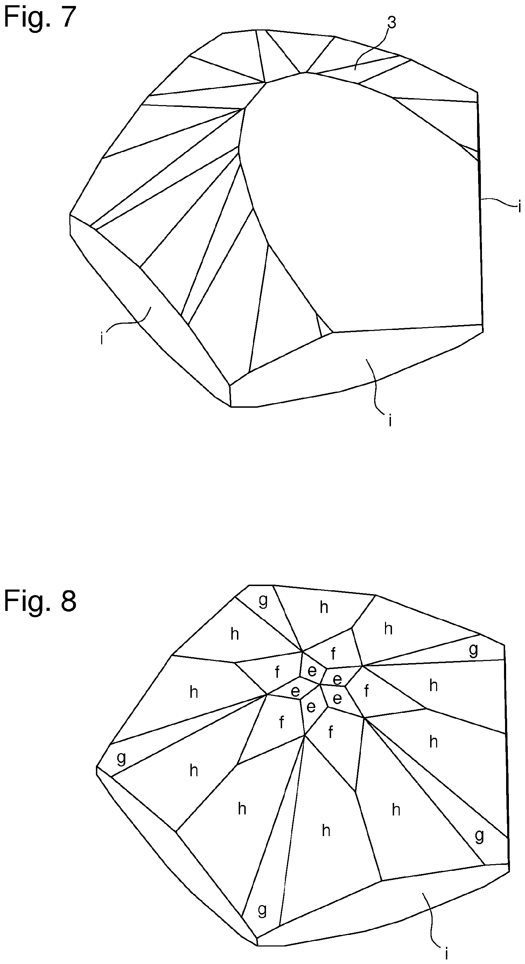

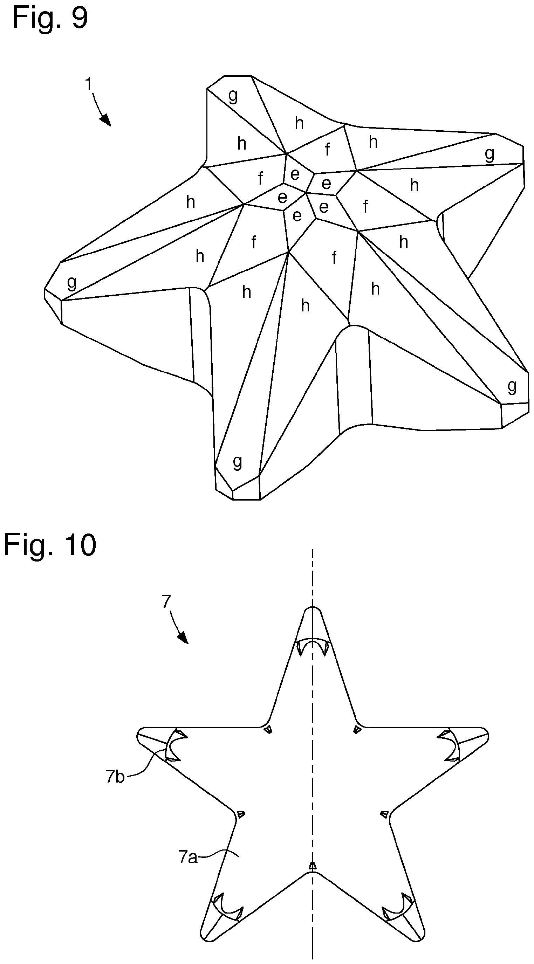

Partant d'un diamant 1 ' à taille brillant dont la couronne 4' et le rondiste 6' sont visibles à la figure 4, cinq faces latérales i de mêmes dimensions et sensiblement perpendiculaires au plan du rondiste sont taillées sur tout le contour du rondiste (fig.5). Les arêtes à la jonction entre les faces latérales i formeront ultérieurement les extrémités de chacune des cinq branches. En plusieurs séquences, on réalise la table 5, les facettes b et optionnellement les facettes d, ainsi que les facettes a et c qui seront partiellement découpées lors de l'étape finale de découpe laser (fig.6). Ensuite, les facettes de la culasse sont taillées. Tout d'abord, la pointe de la culasse, à savoir la colette est coupée (fig.7). Ensuite, en plusieurs séquences, on réalise les facettes e, f et g, et les facettes h qui seront partiellement découpées lors de l'étape finale de découpe laser (fig.8). A la dernière étape, on finalise la découpe par laser pour réaliser la forme en étoile (fig.9). On découpe la matière en V partant d'un sommet de la facette g adjacent à son extrémité libre jusqu'à hauteur du sommet le plus extérieur de la facette f pour terminer au premier sommet rencontré de la facette g voisine. La découpe laser est ainsi réalisée pour chaque face latérale i. La découpe peut, à titre d'exemple, s'effectuer avec un laser à lumière rouge (625-700 nm). Il peut s'agir d'un laser à diode ou encore d'un laser à gaz type laser krypton pour n'en citer que quelques-uns. La découpe est réalisée avec une puissance de quelques watts, plus précisément de l'ordre de 6 watts, et avec une fréquence de 3000 hertz.

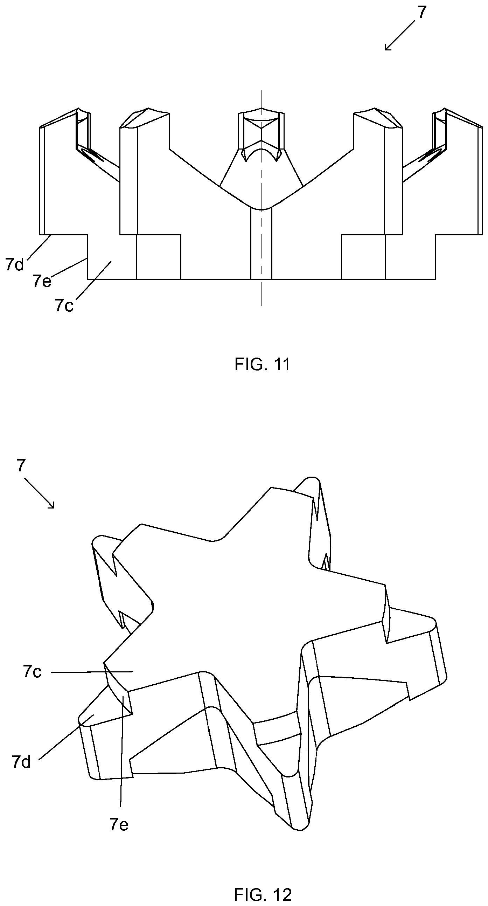

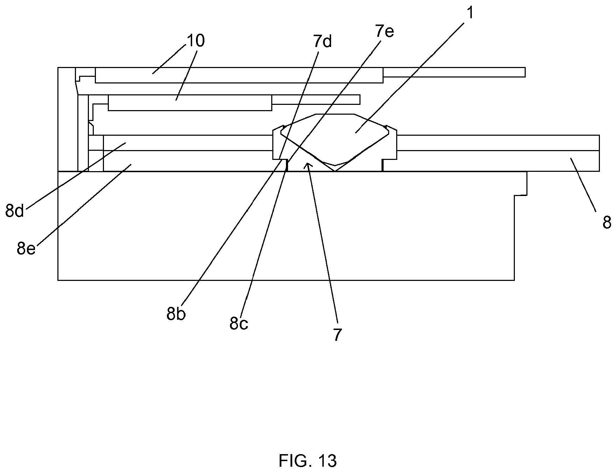

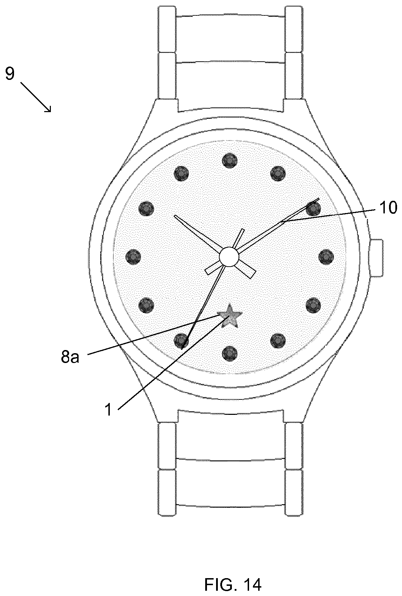

Le diamant ainsi obtenu est serti avec un chaton destiné à être logé dans une ouverture pratiquée dans le cadran. Selon l'invention, le chaton 7 visible aux figures 10 à 12 comprend un logement 7a en forme d'étoile à 5 branches décalées de 108° pour réceptionner le diamant. Ce dernier est serti dans le chaton en rabattant les griffes 7b du chaton sur les extrémités des branches du diamant. Le chaton 7 présente une base 7c en étoile à cinq branches dont les extrémités sont tronquées libérant une marche formée de deux surfaces de contact 7d et 7e destinées à être collées au sein de l'ouverture 8a ménagée dans le cadran 8. L'ouverture 8a présente un contour en forme d'étoile qu'on peut visualiser à la figure 14. Le contour est de forme complémentaire au chaton avec pour chaque branche une marche agissant, d'une part, comme surface d'appui 8b sur laquelle repose la surface de contact 7d du chaton et, d'autre part, comme surfaces de contact 8b, 8c pour le collage (fig.13). Le chaton est fixé au cadran par collage au niveau des surfaces de contact 7d, 7e, 8b, 8c. Le joint de colle est ainsi positionné dans la partie inférieure du cadran. En particulier, dans l'exemple illustré, le cadran 8 est formé de deux couches avec une couche extérieure 8d en nacre qui est la couche visible et une couche intérieure 8e métallique, le joint de colle étant confiné dans la couche métallique du cadran. Selon l'invention, la base du chaton est dans le plan de la face inférieure du cadran afin de maximiser la hauteur disponible pour agencer la pierre. Dans l'exemple illustré, la distance entre la face inférieure du cadran et l'aiguille des heures est de 1.1 mm. Pour permettre le passage des aiguilles, la distance entre la table du diamant et l'aiguille des heures doit être de minimum 0.07 mm. Dès lors, la hauteur du diamant doit être maximum de 1.03. Pour une épaisseur du cadran de 0.6 mm, le diamant dépasse donc de la face supérieure du cadran de maximum 0.43 mm.

Pour finir, la figure 14 représente la montre 9 munie du cadran 8 serti avec le diamant 1 selon l'invention.

### Légende de la figure

(1) Pierre et en particulier diamant, obtenue selon le procédé de l'invention
   (1') Pierre de base
(2) Branche de l'étoile
(3) Culasse de la pierre obtenue selon le procédé de l'invention
   (3') Culasse de la pierre de base
(4) Couronne de la pierre obtenue selon le procédé de l'invention
   (4') Couronne de la pierre de base
(5) Table de la pierre obtenue selon le procédé de l'invention
   (5') Table de la pierre de base
(6) Rondiste de la pierre obtenue selon le procédé de l'invention
   (6') Rondiste de la pierre de base
(7) Chaton
   a. Logement
   b. Griffe
   c. Base
   d. Première surface de contact
   e. Seconde surface de contact
(8) Cadran
   a. Ouverture
   b. Surface d'appui ou première surface de contact
   c. Deuxième surface de contact
   d. Couche extérieure du cadran en nacre
   e. Couche intérieure métallique du cadran
(9) Montre
(10) Aiguille

## Revendications

1. Procédé pour réaliser une pierre (1), en particulier un diamant, en forme d'étoile à plusieurs branches, ledit procédé comprenant les étapes de :
- Mise à disposition d'une pierre de base (1') ayant une taille brillant, ladite pierre (1') comprenant une couronne (4') dite de base, une culasse dite de base (3') et un rondiste (6') dit de base joignant la couronne (4') de base et la culasse (3') de base et définissant un plan,
- Taille d'une pluralité de facettes (a, b, c, d, e, f, g, h, i) sur la couronne (4'), la culasse (3') et le rondiste (6') dits respectivement de base, pour obtenir une pierre transformée délimitée par un pourtour et
- Découpe au laser du pourtour de ladite pierre transformée pour réaliser la forme en étoile
dans lequel successivement :
- on taille sur tout le périmètre du rondiste de base (6') une pluralité de facettes contiguës (i) dont le nombre correspond au nombre de branches (2) de l'étoile, lesdites facettes contiguës (i) étant de mêmes dimensions et sensiblement perpendiculaires au plan du rondiste (6') de base, la jonction entre les facettes contiguës (i) formant des arêtes,
- on taille une pluralité de facettes (a, b, c, d, e, f, g) sur la couronne (4') et sur la culasse (3') respectivement de base,
- entre les arêtes, on découpe au laser des cavités formant des portions creuses entre les branches (2) de l'étoile,
dans lequel l'étoile comporte cinq branches (2) décalées angulairement de 108°,
dans lequel on taille sur la couronne (4') de base une table (5) en forme de pentagone,
dans lequel on taille en outre sur la couronne (4') de base :
- une première série de cinq facettes (a) partageant chacune un côté avec un côté du pentagone,
- une seconde série de cinq facettes losanges (b) partageant chacune un sommet avec un sommet du pentagone et deux côtés avec des facettes adjacentes (a) de la première série,
- une troisième série de dix facettes triangles (c) partageant chacune un côté avec une facette losange (b) de la seconde série et, optionnellement,
- une quatrième série de cinq facettes quadrangles (d) partageant chacune un sommet avec une facette losange (b) de la seconde série et deux côtés avec des facettes triangles adjacentes (c) de la troisième série,
dans lequel on taille sur la culasse (3') de base :
- une cinquième série de cinq facettes quadrangles (e) au centre de la culasse (3') formant une première étoile,
- une sixième série de cinq facettes quadrangles (f) décrivant une seconde étoile autour de la première étoile,
- une septième série de cinq facettes quadrangles (g) partageant chacune un sommet avec une facette quadrangle (e) de la cinquième série,
- une huitième série de dix facettes triangles (h) intercalées chacune entre une facette quadrangle (f) de la sixième série et une facette quadrangle (g) de la septième série.

2. Procédé selon la revendication 1 dans lequel la pierre (1) issue de la découpe au laser à une hauteur H entre son extrémité supérieure et son extrémité inférieure qui est de maximum 2 mm, de préférence de maximum 1.7 mm, plus préférentiellement de maximum 1.3 mm, et, encore plus préférentiellement de maximum 1 mm.

3. Procédé selon la revendication 1 ou 2 dans lequel dans lequel les facettes (a) de la première série, les facettes (b) de la seconde série, les facettes (c) de la troisième série, et les facettes (d) de la quatrième série optionnelle sont taillées respectivement avec des angles compris entre 15 et 23°, 18 et 26°, 24 et 32° et entre 36 et 44° par rapport au plan du rondiste (6') et pour lequel les facettes quadrangles (e) de la cinquième série, les facettes quadrangles (f) de la sixième série, les facettes quadrangles (g) de la septième série et les facettes triangles (h) de la huitième série sont taillées respectivement avec des angles compris entre 12 et 20°, 23 et 31°, 30 et 38° et entre 32 et 40° par rapport au plan du rondiste (6').

4. Pierre (1) obtenue par le procédé selon l'une des revendications 1 à 3, en particulier diamant, comprenant une couronne (4) surmontée d'une table (5), une culasse (3) et un rondiste (6) à l'intersection de la couronne (4) et de la culasse (3), **caractérisée en ce que** ladite pierre (1) présente une découpe en forme d'étoile à plusieurs branches (2), la hauteur H entre la table (5) et l'extrémité libre de la culasse (3) étant inférieure à 2 mm, de préférence à 1.7 mm, plus préférentiellement à 1.3 mm, et, encore plus préférentiellement à 1 mm.

5. Pierre (1) selon la revendication 4, pour laquelle l'étoile comporte cinq branches (2) de mêmes dimensions décalées de 108°.

6. Pierre (1) selon la revendication 4 ou 5, pour laquelle la longueur L entre une extrémité d'une branche (2) et les extrémités de deux branches opposées est comprise entre 1 et 3 mm, de préférence, entre 1.2 et 2.5 mm et plus préférentiellement entre 1.4 et 1.8 mm.

7. Pierre (1) selon l'une quelconque des revendications 4 à 6 pour laquelle la table (5) a une forme pentagonale.

8. Pierre (1) selon l'une quelconque des revendications 4 à 7, comprenant, en plus de la table (5), 20 ou 25 facettes (a, b, c, d) sur la couronne (4) et 25 facettes (e, f, g, h) sur la culasse (3).

9. Pierre (1) selon l'une quelconque des revendications 4 à 8, comprenant au centre de la culasse (3) deux étoiles concentriques visibles à travers la table (5).

10. Pierre (1) selon l'une quelconque des revendications 4 à 9, pour laquelle l'extrémité libre de chaque branche (2) a une forme en double biseau ou à l'inverse en V.

11. Cadran (8) comprenant une ouverture (8a) délimitant un contour en forme d'étoile à plusieurs branches, ladite ouverture (8a) étant accueillant un chaton (7) sertissant la pierre (1) selon l'une quelconque des revendications 4 à 10.

12. Cadran (8) selon la revendication 11, pour lequel l'ouverture (8a) est pourvue sur son contour pour chaque branche d'une marche (8b, 8c) formant une surface d'appui (8b) pour le chaton (7).

13. Cadran (8) selon la revendication 11 ou 12, comportant une couche en nacre (8d).

14. Cadran (8) selon l'une quelconque des revendications 12 à 13, comportant la pierre (1) selon l'une quelconque des revendications 4 à 10.

15. Chaton (7) comportant un logement (7a) en forme d'étoile à plusieurs branches sertissant la pierre (1) selon l'une quelconque des revendications 4 à 10.

16. Chaton (7) selon la revendication 15, comportant une base (7c) surmontée dudit logement (7a), la base (7c) ayant une forme d'étoile avec des branches tronquées délimitant une surface de contact (7d) destinée à s'appuyer sur un cadran (8).

17. Montre (9) comprenant le cadran (8) selon l'une quelconque des revendications 12 à 14.

18. Montre (9) selon la revendication 17, comprenant le chaton (7) selon la revendication 15 ou 16, ledit chaton (7) étant fixé au cadran (8) par un joint de colle et reposant dans un plan formé par une face intérieure du cadran (8).

## Patentansprüche

1. Verfahren zur Herstellung eines Steins (1), insbesondere eines Diamanten, in Form eines vielzackigen Sterns, wobei das Verfahren die folgenden Schritte umfasst:
- Bereitstellen eines Basissteins (1') mit einem Brillantschliff, wobei der Stein (1') eine sogenannte Basiskrone (4'), einen sogenannten Basisboden (3') und eine sogenannte Basisrondiste (6'), die die Basiskrone (4') und den Basisboden (3') verbindet und eine Ebene definiert, aufweist,
- Schleifen einer Vielzahl Facetten (a, b, c, d, e, f, g, h, i) auf der Basiskrone (4'), dem Basisboden (3') und der Basisrondiste (6'), um einen umgestalteten Stein zu erhalten, der durch einen Umfang begrenzt ist, und
- Laserschnitt des Umfangs des umgestalteten Steins zur Herstellung der Sternform,
in dem nacheinander:
- auf dem gesamten Umfang der Basisrondiste (6') eine Vielzahl von aneinandergrenzender Facetten (i) geschliffen werden, deren Anzahl der Anzahl der Arme (2) des Sterns entspricht, wobei die aneinandergrenzenden Facetten (i) die gleichen Abmessungen haben und im Wesentliche senkrecht zur Ebene der Basisrondiste (6') stehen, wobei die Verbindung zwischen den aneinandergrenzenden Facetten (i) Kanten bildet,
- auf der Basiskrone (4') und auf dem Basisboden (3') eine Vielzahl Facetten (a, b, c, d, e, f, g) geschliffen werden,
- zwischen den Kanten mit dem Laser Hohlräume ausgeschnitten werden, die ausgehöhlte Abschnitte zwischen den Armen (2) des Sterns bilden,
in dem der Stern fünf Arme (2) hat, die um 108° winkelversetzt sind,
wobei auf der Basiskrone (4') eine Tafel (5) in der Form eines Fünfecks geschliffen wird,
wobei außerdem auf der Basiskrone (4') Folgendes geschliffen wird:
- eine erste Reihe von fünf Facetten (a), die jeweils eine Seite mit einer Seite des Fünfecks teilen,
- eine zweite Reihe von fünf rautenförmigen Facetten (b), die jeweils einen Eckpunkt mit einem Eckpunkt des Fünfecks und zwei Seiten mit benachbarten Facetten (a) der ersten Reihe teilen,
- eine dritte Reihe von zehn dreieckigen Facetten (c), die jeweils eine Seite mit einer rautenförmigen Facette (b) der zweiten Reihe teilen, und optional
- eine vierte Reihe von fünf viereckigen Facetten (d), die jeweils einen Eckpunkt mit einer rautenförmigen Facette (b) der zweiten Reihe und zwei Seiten mit benachbarten dreieckigen Facetten (c) der dritten Reihe teilen,
wobei auf dem Basisboden (3') Folgendes geschliffen wird:
- eine fünfte Reihe von fünf viereckigen Facetten (e) im Zentrum des Bodens (3'), die einen ersten Stern bilden,
- eine sechste Reihe von fünf viereckigen Facetten (f), die einen zweiten Stern um den ersten Stern herum beschreiben,
- eine siebte Reihe von fünf viereckigen Facetten (g), die jeweils einen Eckpunkt mit einer viereckigen Facette (e) der fünften Reihe teilen,
- eine achte Reihe von zehn dreieckigen Facetten (h), die jeweils zwischen eine viereckige Facette (f) der sechsten Reihe und eine viereckige Facette (g) der siebten Reihe angeordnet sind.

2. Verfahren nach Anspruch 1, wobei der Stein (1), der sich aus dem Laserschneiden ergibt, zwischen seinem oberen Ende und seinem unteren Ende eine Höhe H aufweist, die maximal 2 mm, vorzugsweise maximal 1,7 mm, besonders bevorzugt maximal 1,3 mm und ganz besonders bevorzugt maximal 1 mm beträgt.

3. Verfahren nach Anspruch 1 oder 2, wobei die Facetten (a) der ersten Reihe, die Facetten (b) der zweiten Reihe, die Facetten (c) der dritten Reihe und die Facetten (d) der optionalen vierten Reihe jeweils mit Winkeln geschliffen werden, die zwischen 15 und 23°, 18 und 26°, 24 und 32° bzw. 36 und 44° zur Ebene der Rondiste (6') liegen, und wobei die viereckigen Facetten (e) der fünften Reihe, die viereckigen Facetten (f) der sechsten Reihe, die viereckigen Facetten (g) der siebten Reihe und die dreieckigen Facetten (h) der achten Reihe jeweils mit Winkeln geschliffen werden, die zwischen 12 und 20°, 23 und 31°, 30 und 38° bzw. 32 und 40° zur Ebene der Rondiste (6') liegen.

4. Stein (1), der mit dem Verfahren nach einem der Ansprüche 1 bis 3 erhalten wird, insbesondere ein Diamant, umfassend eine Krone (4), die eine Tafel (5) krönt, einen Boden (3) und eine Rondiste (6) am Schnittpunkt der Krone (4) und des Bodens (3), **dadurch gekennzeichnet, dass** der Stein (1) einen Schnitt in Form eines Sterns mit mehreren Armen (2) aufweist, wobei die Höhe (H) zwischen der Tafel (5) und dem freien Ende des Bodens (3) geringer ist als 2 mm, vorzugsweise geringer ist als 1,7 mm, besonders bevorzugt geringer ist als 1,3 mm und ganz besonders bevorzugt geringer ist als 1mm.

5. Stein (1) nach Anspruch 4, bei dem der Stern fünf um 108° versetzt Arme (2) mit gleichen Abmessungen aufweist.

6. Stein (1) nach Anspruch 4 oder 5, bei dem die Länge L zwischen einem Ende eines Arms (2) und den Enden zweier gegenüberliegender Arme zwischen 1 und 3 mm, vorzugsweise zwischen 1,2 und 2,5 mm und besonders bevorzugt zwischen 1,4 und 1,8 mm liegt.

7. Stein (1) nach einem der Ansprüche 4 bis 6, bei dem die Tafel (5) eine fünfeckige Form hat.

8. Stein (1) nach einem der Ansprüche 4 bis 7, umfassend zusätzlich zur Tafel (5) 20 oder 25 Facetten (a, b, c, d) an der Krone (4) und 25 Facetten (e, f, g, h) an dem Boden (3).

9. Stein (1) nach einem der Ansprüche 4 bis 8, umfassend in der Mitte des Bodens (3) zwei konzentrische Sterne, die durch die Tafel (5) hindurch sichtbar sind.

10. Stein (1) nach einem der Ansprüche 4 bis 9, bei dem das freie Ende jedes (2) Arms eine doppelt gefaste oder umgekehrt V-förmige Form hat.

11. Zifferblatt (8), das eine Öffnung (8a) aufweist, die eine Kontur in Form eines mehrzackigen Sterns begrenzt, wobei die Öffnung (8a) eine Fassung (7) aufnimmt, die den Stein (1) nach einem der Ansprüche 4 bis 10 einfügt.

12. Zifferblatt (8) nach Anspruch 11, bei dem die Öffnung (8a) an ihrer Kontur für jeden Arm mit einer Stufe (8b, 8c) versehen ist, die für die Fassung (7) eine Auflagefläche (8b) bildet.

13. Zifferblatt (8) nach Anspruch 11 oder 12, umfassend eine Perlmuttschicht (8d).

14. Zifferblatt (8) nach einem der Ansprüche 12 bis 13, umfassend den Stein (1) nach einem der Ansprüche 4 bis 10.

15. Fassung (7), umfassend eine Aufnahme (7a) in Form eines mehrzackigen Sterns, die den Stein (1) nach einem der Ansprüche 4 bis 10 einfasst.

16. Fassung (7) nach Anspruch 15, umfassend eine Basis (7c), die über der Aufnahme (7a) angebracht ist, wobei die Basis (7c) eine Sternform mit abgestumpften Armen hat, die eine Kontaktfläche (7d) begrenzen, die dazu bestimmt ist, auf einem Zifferblatt (8) aufzuliegen.

17. Uhr (9) mit dem Zifferblatt (8) nach einem der Ansprüche 12 bis 14.

18. Uhr (9) nach Anspruch 17 mit der Fassung (7) nach Anspruch 15 oder 16, wobei die Fassung (7) am Zifferblatt (8) durch eine Klebeverbindung befestigt ist und in einer Ebene ruht, die durch eine Innenseite des Zifferblatts (8) gebildet ist.

## Claims

1. A method for producing a gemstone (1), in particular a diamond, in the shape of a star with several arms, said method comprising the steps of:
- Providing a basic, brilliant cut gemstone (1'), said gemstone (1') comprising a basic crown (4'), a basic pavilion (3') and a basic girdle (6') joining the basic crown (4') and the basic pavilion (3') and defining a plane,
- Cutting a plurality of facets (a, b, c, d, e, f, g, h, i) in the respectively basic crown (4'), pavilion (3') and girdle (6'), to obtain a transformed gemstone delimited by a periphery, and
- Laser cutting the periphery of said transformed gemstone to produce the star shape,
wherein successively:
- there is cut over the entire periphery of the basic girdle (6') a plurality of adjacent facets (i), the number of which matches the number of arms (2) of the star, said adjacent facets (i) being of the same dimensions and substantially perpendicular to the plane of the basic girdle (6'), the junction between the adjacent facets (i) forming edges,
- there is cut a plurality of facets (a, b, c, d, e, f, g) in the respectively basic crown (4') and pavilion (3'),
- between the edges, cavities are laser cut to form hollow portions between the arms (2) of the star,
wherein the star includes five arms (2) offset by an angle of 108°,
wherein a pentagonal-shaped table (5) is cut in the basic crown (4'),
wherein there is also cut in the basic crown (4'):
- a first series of five facets (a) each sharing one side with a side of the pentagon,
- a second series of five rhombus facets (b) each sharing a vertex with a vertex of the pentagon and two sides with adjacent facets (a) of the first series,
- a third series of ten triangular facets (c) each sharing one side with a rhombus facet (b) of the second series, and, optionally,
- a fourth series of five quadrangular facets (d) each sharing a vertex with a rhombus facet (b) of the second series and two sides with adjacent triangular facets (c) of the third series,
wherein there is cut in the basic pavilion (3'):
- a fifth series of five quadrangular facets (e) at the centre of the pavilion (3') forming a first star,
- a sixth series of five quadrangular facets (f) describing a second star around the first star,
- a seventh series of five quadrangular facets (g) each sharing a vertex with a quadrangular facet (e) of the fifth series,
- an eighth series of ten triangular facets (h) each inserted between a quadrangular facet (f) of the sixth series and a quadrangular facet (g) of the seventh series.

2. The method according to claim 1, wherein the gemstone (1) obtained by laser cutting has a height H between its upper end and its lower end that is a maximum of 2 mm, preferably a maximum of 1.7 mm, more preferentially a maximum of 1.3 mm, and even more preferentially a maximum of 1 mm.

3. The method according to claim 1 or 2, wherein the facets (a) of the first series, the facets (b) of the second series, the facets (c) of the third series, and the facets (d) of the optional fourth series are respectively cut at angles comprised between 15 and 23°, 18 and 26°, 24 and 32° and between 36 and 44° with respect to the plane of the girdle (6') and wherein the quadrangular facets (e) of the fifth series, the quadrangular facets (f) of the sixth series, the quadrangular facets (g) of the seventh series and the triangular facets (h) of the eighth series are respectively cut at angles comprised between 12 and 20°, 23 and 31°, 30 and 38° and between 32 and 40° with respect to the plane of the girdle (6').

4. A gemstone (1) obtained by the method according to one of claims 1 to 3, in particular a diamond, comprising a crown (4) surmounted by a table (5), a pavilion (3) and a girdle (6) at the intersection of the crown (4) and the pavilion (3), **characterised in that** said gemstone (1) is cut in the form of a star with several arms (2), the height H between the table (5) and the free end of the pavilion (3) being less than 2 mm, preferably less than 1.7 mm, more preferentially less than 1.3 mm and, even more preferentially less than 1 mm.

5. The gemstone (1) according to claim 4, wherein the star has five arms (2) of the same dimensions offset by 108°.

6. The gemstone (1) according to claim 4 or 5, wherein the length L between one end of an arm (2) and the ends of two opposite arms is comprised between 1 and 3 mm, preferably between 1.2 and 2.5 mm and more preferentially between 1.4 and 1.8 mm.

7. The gemstone (1) according to any one of claims 4 to 6, wherein the table (5) is of pentagonal shape.

8. The gemstone (1) according to any one of claims 4 to 7, comprising, in addition to the table (5), 20 or 25 facets (a, b, c, d) in the crown (4) and 25 facets (e, f, g, h) in the pavilion (3).

9. The gemstone (1) according to any one of claims 4 to 8, comprising, at the centre of the pavilion (3), two concentric stars visible through the table (5).

10. The gemstone (1) according to any one of claims 4 to 9, wherein the free end of each arm (2) has a double bevelled shape or conversely a V-shape.

11. A dial (8) comprising an aperture (8a) delimiting a contour in the shape of star with several arms, said aperture (8a) being intended for receiving a setting (7) for setting the gemstone (1) according to any one of claims 4 to 10.

12. The dial (8) according to claim 11, wherein the aperture (8a) is provided, on its periphery for each arm, with a step (8b, 8c) forming a bearing surface (8b) for the setting (7).

13. The dial (8) according to claim 11 or 12, comprising a mother-of-pearl layer (8d).

14. The dial (8) according to any one of claims 12 to 13, including the gemstone (1) according to any one of claims 4 to 10.

15. A setting (7) including a housing (7a) in the shape of a star with several arms intended for setting the gemstone (1) according to any one of claims 4 to 10.

16. The setting (7) according to claim 15, including a base (7c) surmounted with said housing (7a), the base (7c) having a star shape with truncated arms delimiting a contact surface (7d) intended to rest on a dial (8).

17. A watch (9) comprising the dial (8) according to any one of claims 12 to 14.

18. The watch (9) according to claim 17, comprising the setting (7) according to claim 15 or 16, said setting (7) being secured to the dial (8) by an adhesive joint and resting in a plane formed by an inner face of the dial (8).
